# EUROPEAN PATENT APPLICATION

(11) **EP 2 529 979 A1**
(43) Date of publication of application: **05.12.2012**
(21) Application number: 11736852.2
(22) Date of filing: 13.01.2011
(51) Int. Cl.: B60R 16/04, B60H 1/00, B60H 1/22, B60R 16/02

(54) **VEHICULAR BATTERY TEMPERATURE ADJUSTMENT DEVICE AND VEHICULAR BATTERY TEMPERATURE ADJUSTMENT METHOD**

(30) Priority: 27.01.2010 JP 2010014980
(71) Applicant: Calsonic Kansei Corporation, Saitama-shi, Saitama 331-8501 (JP)
(72) Inventor: TONOZUKA Hiroshi, Saitama-shi Saitama 331-8501 (JP); OTSUKA Takashi, Saitama-shi Saitama 331-8501 (JP)
(74) Representative: Oxley, Robin John George
(86) International application number: PCT/JP2011/050432
(87) International publication number: WO 2011/093137

(57) **Abstract**

A temperature regulating device of an on-vehicle battery includes a battery 1 capable of being charged at a charge station 11 in a state where it is mounted on a vehicle, a battery temperature sensor 4 for detecting a battery temperature, an SOC estimation part 3a for estimating a battery SOC, an air conditioner unit 2 for regulating the battery temperature, a charge judgment part 3b for judging based on the battery SOC whether or not the battery is need to be charged, a temperature regulating part 3c for executing during-vehicle-running temperature regulating control to output a temperature control command to the air conditioner unit 2 so that the battery temperature at a charge start becomes equal to a target temperature.

## Description

### [TECHNICAL FIELD]

The present invention relates to a temperature regulating device of an on-vehicle battery and a temperature regulating method of the on-vehicle battery.

### [BACKGROUND OF THE INVENTION]

The patent reference 1 discloses a technology to regulate a battery temperature by using cool air flow or warm air flow of an air conditioner so as to become its temperature at charge start to be a target temperature that is an appropriate one at the charge start.

### [PRIOR ART DOCUMENT]

### [PATENT DOCUMENT]

[Patent Document 1] Japanese Patent Application Laid-Open Publication No. 7-73906

### [DISCLOSURE OF THE INVENTION]

### [PROBLEM(S) TO BE SOLVED BY THE INVENTION]

However, in the above-described prior art, it takes a long time from a vehicle stop to completion of battery charge because the battery cannot be charged until the battery temperature becomes the target temperature when the battery is intended to be charged from the state where the battery temperature is high at a certain extent, in such a case where the charge is carried out immediately after the vehicle stops.

### [MEANS FOR SOLVING THE PROBLEMS]

In the present invention, a temperature of a battery is regulated in such a way that a battery temperature at charge start comes to a target temperature in the case where the charge of the battery is judged to be needed during a vehicle running.

### [EFFECT OF THE INVENTION]

Therefore, in the present invention, the temperature of the battery is regulated, allowing for the target temperature at the charge start during the vehicle running, in such a way that the battery temperature becomes equal to or lower than the target temperature in the case where the charge of the battery is judged to be needed during the vehicle running.

### [BRIEF DESCRIPTION OF THE DRAWINGS]

FIG. 1 is a view of a construction showing a system of a temperature regulating device of an on-vehicle battery according to a first embodiment of the present invention;
FIG 2 is a flow chart showing a flow of a during-vehicle-running temperature regulating control process that is executed by the temperature regulating device of the on-vehicle battery; and
FIG. 3 is a time chart showing a temperature regulating operation during the vehicle running in the case where the flow chart shown in FIG2 is executed by the temperature regulating device of the on-vehicle battery of the first embodiment.

### [DESCRIPTION OF REFERENCE NUMBERS]

- 1: battery
- 1a: case
- 2: air conditioner unit (temperature regulating means)
- 2a: blower
- 3: battery controller
- 3a: SOC estimation part (state-of-charge detecting means)
- 3 b: charged judgment part (charged judgment means)
- 3c: temperature regulation part (during-vehicle-running temperature regulating control means)
- 4: battery temperature sensor (temperature detecting means)
- 5: battery voltage sensor
- 6: battery charge and discharge current sensor
- 7: navigation system
- 8: normal charge connector
- 9: rapid charge connector
- 11: charge station
- 12: connector

### [BEST MODE FOR CARRYING OUT THE INVENTION]

Hereinafter, the best mode that carries out the present invention will be explained based on an embodiment with reference to the accompanying drawings.

### [FIRST EMBODIMENT]

### [The construction of the system]

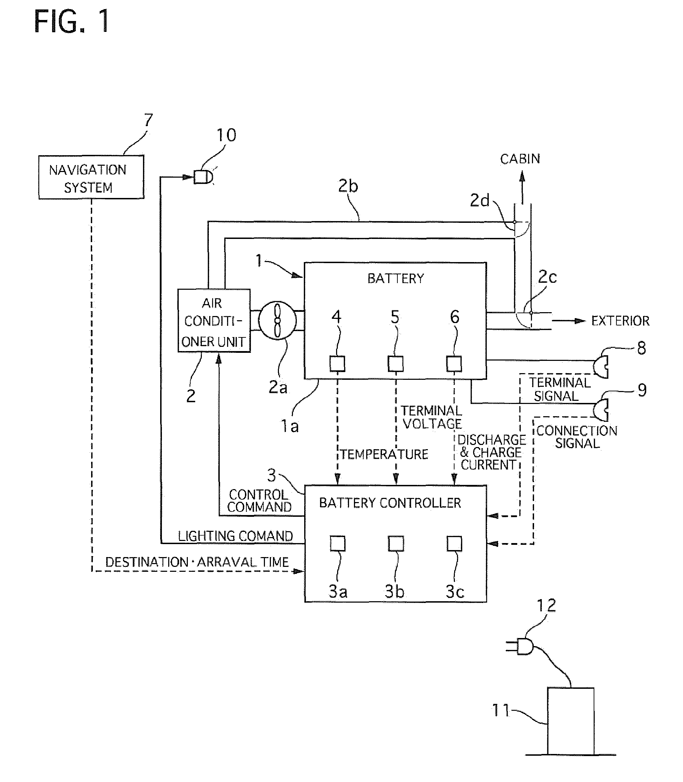

FIG. 1 is a view of a construction showing a system of a temperature regulating device of an on-vehicle battery according to a first embodiment, and the temperature regulating device of the on-vehicle battery is applied to an electric vehicle.
The battery 1 employs a secondary battery capable of being repeatedly chargeable, and it supplies a not-shown electric motor that drives drive wheels with electric power. The battery 1 may employ a nickel ion battery. The battery 1 is arranged under a cabin (a passenger compartment), and it is fixed on a vehicle body.

An air conditioner unit (a temperature regulating means) 2 regulates a temperature in the cabin to become equal to the temperature which a driver sets. In addition, the air conditioner unit 2 provides air flow toward the battery 1 to regulate a temperature thereof according to a control command outputted from a battery controller 3. The air flow outputted from the air conditioner unit 2 is supplied to the interior of a case 1a of the battery 1 through a blower 2a, and then it is discharged to the exterior of the vehicle or the cabin, or it is refluxed to the air conditioner unit 2. The air flow that has passed through the battery 1 is appropriately shifted by using open and close control of two doors 2c and 2d that are provided in a circulating pathway 2b between the air conditioner unit 2 and the battery 1.

Various signals are inputted into the battery controller 3 from a battery temperature sensor (a temperature detecting means) 4, a battery voltage sensor 5, a battery discharge and charge current sensor 6, a navigation system 7, a normal charge connector 8 and a rapid charge connector 9.
The battery temperature sensor 4, the battery voltage sensor 5 and the battery discharge and charge current sensor 6 are provided in the interior of the case 1a. The battery temperature sensor 4 detects a temperature of the battery 1 (hereinafter referred to as battery temperature). The battery voltage sensor 5 detects a voltage of the battery 1. The battery discharge and charge current sensor 6 detects a discharge and charge electric current of the battery 1.

The navigation system 7 provides a driver with map information on a periphery of the vehicle and a position of the vehicle, and it carries out route guidance to a destination that the driver sets.

The normal charge connector 8 is connected to a normal charge connector (a household electric power outlet) of external power charge equipment (his or her house for example) when the battery 1 is charged in a normal charge mode. A connection signal is outputted to the battery controller 3 when the normal charge connector 8 is connected.
The rapid charge connector 9 is connected to a connector 12 of a charge station 11, which is external charge power equipment, when the battery 1 is charged in a rapid charge mode. A connection signal is outputted to the battery controller 3 when the rapid charge connector 9 is connected. Herein, the rapid charge mode is a mode having a charge ratio higher than that of the normal charge mode, and the SOC (State of Charge) of the battery 1 can come to a full charge state in the rapid charge mode in a time shorter than that in the normal charge mode. Incidentally, the charge ratio corresponds to the charge amount per unit time.

The battery controller 3 includes an SOC estimation part (a discharge and charge electric current detecting means) 3a, a charge judgment part (a charge judgment means) 3b, and a temperature regulating part (a during-vehicle-running temperature control means) 3c.
The SOC estimation means 3a estimates a present SOC of the battery 1 based on a battery voltage and a discharge and charge electric current of the battery 1.
The charge judgment part 3b always monitors the battery SOC that is estimated by the SOC estimation part 3a. It judges that a charge is needed when the SOC of the battery 1 becomes equal to or lower than a necessary charge threshold, and then it outputs a lighting command to a warning lamp 10 so that a driver can know a fall in the SOC of the battery 1.
The temperature regulating part 3c always monitors a battery temperature to output a control command to regulate the temperature of the battery 1 to the air conditioner unit 2 so that the temperature of the battery 1 can be maintained within an operating temperature range or a charge temperature range. In addition, the temperature regulating part 3c carries out a during-vehicle-running temperature control process, which is described below, during the vehicle running so as to shorten a time needed from a vehicle stop to the end of the charge (hereinafter referred to as a charge time), which is an aim of the present invention.

### [During-vehicle-running temperature control process]

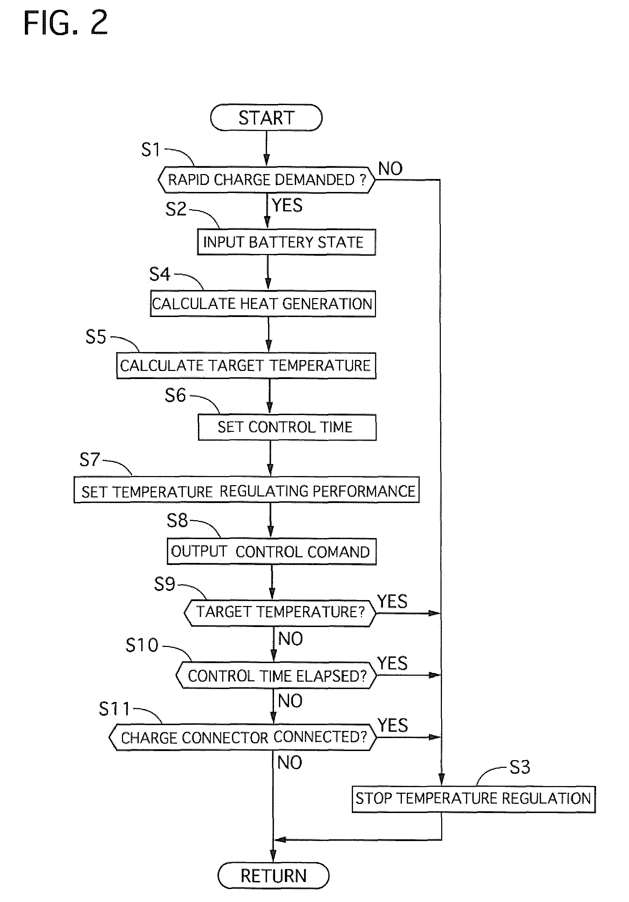

FIG. 2 is a flow chart that shows a flow of the during-vehicle-running temperature control process executed by the temperature regulating part 3c of the first embodiment. Each step thereof will be described bellow. The process is repeatedly executed with a predetermined operational period while the charge judgment part 3b judges that the battery 1 needs a charge.

At step S1, it is judged whether or not a rapid charge mode is demanded by the driver. If YES, the flow goes to step S2, while if NO, the flow goes to step S3.
Herein, it is judged that the rapid chard mode is demanded in the case where the driver selects a charge station 11 as his or her destination in the navigation system 7.

At the step S2, the battery temperature is inputted to the battery controller 3 from the battery temperature sensor 4, the battery voltage is inputted thereto from the battery voltage sensor 5, and the battery discharge and charge electric current is inputted thereto from the battery discharge and charge electric current sensor 6.

At the step S3, the during-vehicle-running temperature control is stopped, and the flow returns. In this case, the control command is outputted to the air conditioner unit 2 so that the battery temperature is maintained within the predetermined temperature range or the charge temperature range as explained above.

On the other hand, at step S4, the estimated amount of heat generation due to the rapid charge in the rapid charge mode is calculated. Herein, the amount of heat generation can be obtained by multiplication of a charge rate in the rapid charge mode, a charge time and a certain coefficient. In addition, the estimated amount may be obtained by using a map containing a relationship between the charge time and the amount of heat generation which is previously obtained in experiments.
Incidentally, the charge time means a time needed for the battery SOC to come to the SOC at a full charge from a present one when the battery 1 is charged at the charge rate of the rapid charge mode.
The full charge in the specification means the full charge mount or the practically no-trouble amount.

At step S5, a target temperature of the battery 1 is set, and then the flow goes to step S6.
Herein, the target temperature is the value obtained by subtracting a temperature rising amount of the battery 1 corresponding to the calculated amount of heat generation of the battery 1 from an upper limit in the temperature range that does not influence a battery life (hereinafter referred to as a permissible upper limit). The permissible upper limit is set to be 60°C for example in the case of a secondary battery of lithium-ion cells. Incidentally, the permissible upper limit may have the value 2-3°C smaller than 60°C for example.

At step the S6, the control time (a time from the start to the end of the during-vehicle-running temperature control) of the during-vehicle-running temperature control is set, and then the flow goes to step S7.
Herein, the control time is set to be estimated as a time of arrival at the charge station 11 that is calculated by the navigation system 7.

At the step S7, a temperature regulating performance of the air conditioner unit 2 is set, and then the flow goes to step S8. Herein the temperature regulating performance is a performance (the amount of air flow, and the temperature of the air flaw) of the air conditioner unit 2 that is needed for the present battery temperature to become equal to the target temperature during taking the control time.

At the step S8, the control command corresponding to the set temperature regulating performance is outputted to the air conditioner unit 2, and the flow goes to step S9.

At the stepS9, it is judged whether or not the battery temperature reaches the target temperature. If YES, the flow goes to the step S3, while if NO, the flow goes to step S10.

At the step S10, it is judged whether or not the control time elapses. If YES, the flow goes to the step S3, while if No, the flow goes to step S11.

At the step S11, it is judged whether or not the rapid charge connector 9 is connected to the connector 12 of the charge station 11. If YES, the flow goes to the step S3, while if No, the flow returns.

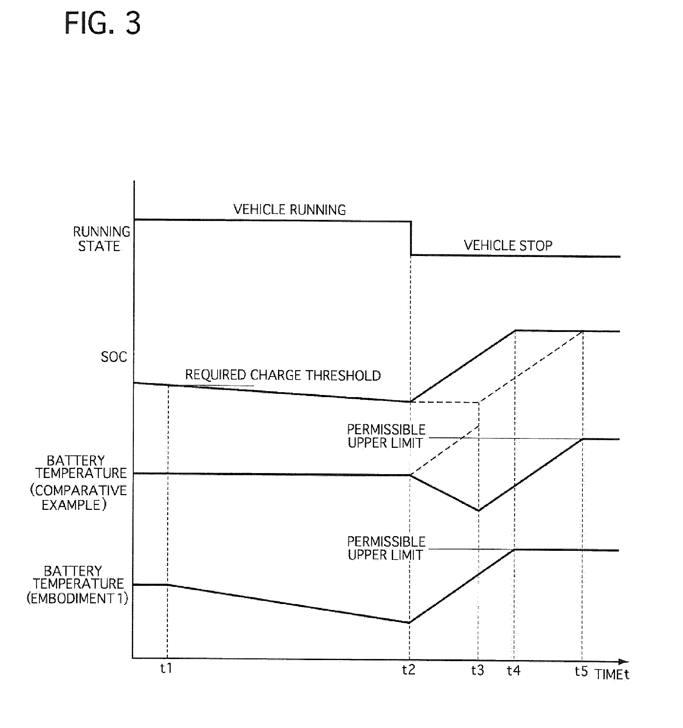

Next, the operation will be described.
[The operation of the during-vehicle-running temperature control]
FIG. 3 is a time chart showing the operation of the during-vehicle-running temperature control of the first embodiment.
At time t1 the warning lamp 10 is turned on to give the alarm on the lowering of the battery SOC against the driver because the battery SOC becomes equal to or lower than the necessary charge threshold while the vehicle is running.
Consequently, the driver changes the destination to the nearby charge station 11. At this time, the during-vehicle-running temperature control starts, and the flow goes as the step S1 → the step S2 → the step S4 → the step S5 → the step S6 → the step S7 → the step S8 in the flow chart shown in FIG. 2. In the control, the target temperature allowed for the temperature rise due to the rapid charge (that is, the target temperature at which the battery temperature does not exceed the permissible upper limit in the case where the rapid charge is carried out immediately after the vehicle arrives at the charge station 11) is set, and the amount of the air flow and the temperature of the air flow in the air conditioner unit 2 are set in such a way that the battery temperature becomes equal to the target temperature after the control time elapses.

At an interval between the time t1 and time t2, the battery temperature gradually falls, and the battery temperature becomes correspondent to the target temperature at the time t2. Thus, the flow goes from the step S9 to the step S3, and the during-vehicle-running temperature control is stopped. At approximately the same time as the time t2, the rapid charge of the battery 1 is started when the driver connects the rapid charge connector 9 to the connector 12 of the charge station 11 after the vehicle arrives at the charge station 11.

At an interval between the time t2 and time t4, the battery temperature rises according to the charge rate in the rapid charge mode.

At the time t4, the battery charge is ended because the battery SOC comes to a full charge state. At this time, the battery temperature is suppressed so as to be equal to or lower than the permissible upper limit, which does not cause the deterioration of the battery life due to the temperature rise.

Here is a comparative example, namely the case where the temperature of the battery 1 is controlled in such a way that the temperature of the battery 1 at the charge start after the vehicle stops without executing the during-vehicle-running temperature control becomes equal to the target one. In this case, the vehicle arrives at the charge station 11 and the rapid charge connector 12 is connected to its equipment side at the time t2, the air conditioner unit 2 starts to cool the battery 1. However, the battery temperature is high due to the heat generation immediately after the vehicle stops because of the discharge during the vehicle running, and accordingly the battery temperature exceeds the permissible upper limit due to the heat generated during the charge in the case of the charge in the rapid charge mode immediately after the vehicle stops. Therefore, the charge cannot start until the time t3 at when the battery temperature falls down to the target one in the comparative example.

On the contrary, in the first embodiment, the battery 1 starts to be cooled during the vehicle running, and accordingly its charge can start at the time t2 earlier than the time t3. In other words, in the first embodiment, the temperature of the battery 1 is controlled during the vehicle running in advance to the vehicle stop in such a way that the temperature at the charge start becomes equal to the target one in the case where the charge of the battery 1 is judged to be needed and the rapid charge mode is demanded by the driver during the vehicle running, and consequently the time from the vehicle stop to the charge end can be shortened relative to that in the comparative example.

In addition, the required time from the time when the charge is judged to be needed to the charge start is estimated, and the time is set to be the control time to gradually approach the battery temperature to the target one. Therefore, the temperature regulating performance of the air conditioner performance can be suppressed at a low level. For example, in the comparative example, the charge time might be shortened by maintaining the temperature regulating performance of the air conditioner unit at a high level during the vehicle stop. However, in this case, the most part of the temperature regulating performance of the air conditioner unit is used for cooling a battery side, and consequently the temperature regulating performance required at a cabin side cannot be obtained, so that the cabin cannot be maintained in a comfortable state.
On the contrary, in the first embodiment, a high performance to regulate the temperature of the battery 1 is not required, and accordingly the most part of the temperature regulating capacity of the air conditioner unit 2 can be used for regulating the temperature at the cabin side, thereby maintaining the cabin in a comfortable state.

At this time, the time until the vehicle arrives is set as the control time (a control period) of the during-vehicle-running temperature control, and accordingly the battery temperature at the charge start can more surely correspond to the target temperature, since the charge of the battery 1 is carried out after the vehicle arrives at the charge stand 11.

In the first embodiment, the target temperature is set in such a way that the battery temperature at the charge end becomes equal to or lower than the certain permissible upper limit, and therefore the deterioration of the battery life due to the battery temperature exceeding the permissible upper limit can be suppressed.
In addition, the target temperature is set to be the value obtained by subtracting the heat rising amount due to the heat generation at the charge time from the permissible upper limit, and therefore the battery temperature can be surely suppressed from exceeding the permissible upper limit.
In the first embodiment, the during-vehicle-running temperature regulating control is executed when the rapid charge mode is demanded, while the during-vehicle-running temperature regulating control is not executed when the rapid charge mode is not demanded. This reason comes from the fact that the charge rate in the normal charge mode is lower than that in the rapid charge mode, and consequently it is rare for the battery temperature to exceed the upper limit. Therefore, unnecessary temperature regulation of the battery 1 can be avoided, and the battery SOC can be suppressed from lowering.

The first embodiment can provide the advantages listed below. (1) The device includes the battery 1 capable of being charged by using the eternal charge equipment (the charge station 11, his or her house and others) in a state where it is mounted on the vehicle, the battery temperature sensor 4 for detecting the battery temperature, the SOC estimation part 3 a for estimating the battery SOC, the air conditioner unit 2 for regulating the battery temperature, the charge judgment part 3b for judging based on the battery SOC whether or not the battery is need to be charged, the temperature regulating part 3c for executing the during-vehicle-running temperature regulating control to output the temperature control command to the air conditioner unit 2 so that the battery temperature at the charge start becomes equal to the target temperature. Therefore, the charge time can be shortened.

(2) The temperature regulating part 3c estimates the required time from the time of the charge of the battery 1 being judged to be needed to the start time of charge and it sets the estimated time to be the control tome so as to gradually approach the battery temperature to the target temperature. Therefore, it can suppress the temperature regulating performance of the air conditioner unit 2 to maintain at the low level, so that it can ensure the temperature regulating performance necessary for the cabin side to maintain the cabin to be in the comfortable state.

(3) The temperature regulating part 3c sets the time for the vehicle to arrive at the charge station 11 as the control time, and therefore the battery temperature at the charge start can be more surely correspond to the target temperature.

(4) The temperature regulating part 3c sets the target temperature in such a way that the battery temperature at the charge end becomes equal to or lower than the permissible upper limit, and therefore the deterioration of the battery life due to the battery temperature exceeding the permissible upper limit can be suppressed.

(5) The temperature regulating part 3c sets the target temperature to be the value obtained by subtracting the temperature rise amount due to the heat generation during the charge from the permissible upper limit, and therefore the battery temperature can be more surely suppressed from exceeding the permissible upper limit.

(6) The battery 1 can be charged in the normal charge mode and in the rapid charge mode where the charge rate is higher than that in the normal charge mode, and the temperature regulating part 3c executes the during-vehicle-running temperature regulating control in the case where the rapid charge mode is demanded, while it does not execute the during-vehicle-running temperature regulating control in the case where the normal charge mode is demanded. Therefore, the unnecessary regulation of the battery 1 can be avoided, and the fall of the battery SOC can be suppressed.

(7) In the case where the charge of the battery is judged to be needed during the vehicle running, the during-vehicle-running temperature regulating control to regulate the temperature of the battery 1 is executed in advance in such a way that the battery temperature at the charge start becomes to be the target temperature, and therefore the charge time can be shortened.

### [Other Embodiments]

While the best mode of the present invention has been explained based on the embodiment, the present invention is not limited to the embodiment, and design changes and modifications thereof are covered by the present invention as far as they do not depart from the spirit of the present invention.

For example, the judgment on whether or not the rapid charge mode is demanded is made by the judgment on whether or not the charge station 11 is selected as the destination in the navigation system 7 in the embodiment. A switch may be provided to demand the rapid charge mode by a driver's operation.
The during-vehicle-running temperature regulating control may be executed regardless of the demand or no demand of the rapid charge mode.

## Claims

1. A temperature regulating device for an on-vehicle battery comprising:
a battery capable of being chargeable in an on-vehicle state by using an external equipment;
a temperature detecting means detecting a temperature of the battery;
a charge state detecting means detecting a charge state of the battery;
a charge judgment means judging based on the charge state whether or not a charge of the battery is needed; and
a during-vehicle-running temperature regulating means executing during-vehicle-running temperature regulating control to output a temperature regulating control command to the temperature regulating means in such a way that a battery temperature at a charge start becomes to be a target temperature in a case where a charge is needed during the vehicle running.

2. The temperature regulating device for an on-vehicle battery according to claim 1, wherein
the during-vehicle-running temperature regulating means estimates a required time from time of judgment on the charge to be needed to time of the charge start, and wherein
the during-vehicle-running temperature regulating means sets the estimated time as a control time to gradually approach the battery temperature to the target temperature.

3. The temperature regulating device for an on-vehicle battery according to claim 2, wherein
the during-vehicle-running temperature regulating means sets time when a vehicle arrives at the external charge equipment as the control time.

4. The temperature regulating device for an on-vehicle battery according to any one of claims 1 to 3, wherein
the during-vehicle-running temperature regulating means sets the target temperature so that the battery temperature after a charge end becomes no larger than a certain permissible upper limit.

5. The temperature regulating device for an on-vehicle battery according to claim 4, wherein
the during-vehicle-running temperature regulating means sets the target temperature to be a value obtained by subtracting a temperature rising amount due to heat generation at the charge from the permissible upper limit.

6. The temperature regulating device for an on-vehicle battery according to any one of claims 1 to 5, wherein
the battery is chargeable in two different modes containing of a normal charge mode and a rapid charge mode where a charge rate in the rapid charge mode is higher than a charge rate in the normal mode, and wherein
the during-vehicle-running temperature regulating means executes the during-vehicle-running temperature regulating control in a case where the rapid charge mode is demanded, and during-vehicle-running temperature regulating means does not execute the during-vehicle-running temperature regulating control in a case where the normal charge mode is demanded.

7. A temperature regulating means of an on-vehicle battery comprising the step of:
executing a during-vehicle-running temperature regulating control to regulate a battery in advance so as to become a battery temperature at a charge start to be a target temperature in a case where the charge of the battery is judged to be needed during a vehicle running.
